# EUROPÄISCHE PATENTSCHRIFT

(11) **EP 1 608 700 B1**
(45) Veröffentlichungstag und Bekanntmachung des Hinweises auf die Patenterteilung: **29.06.2011**
(21) Anmeldenummer: 04719444.4
(22) Anmeldetag: 11.03.2004
(51) Int. Cl.: C08L 3/02

(54) **VERWENDUNG VON POLYMERISATEN ZUR STÄRKEMODIFIZIERUNG**
USE OF POLYMERS FOR STARCH MODIFICATION
UTILISATION DE POLYMERES DANS LA MODIFICATION DE L'AMIDON

(30) Priorität: 27.03.2003 DE 10313939
(43) Veröffentlichungstag der Anmeldung: 28.12.2005
(73) Patentinhaber: Wacker Chemie AG, 81737 München (DE)
(72) Erfinder: MOSSEVELD, Henk, NL-1562 SC Krommenie (NL); WIERER, Konrad, Alfons, 84489 Burghausen (DE); KOHLHAMMER, Klaus, 84533 Marktl (DE)
(74) Vertreter: Schuderer, Michael
(86) Internationale Anmeldenummer: PCT/EP2004/002534
(87) Internationale Veröffentlichungsnummer: WO 2004/085533

(56) Entgegenhaltungen:
- EP-A- 0 611 804
- WO-A-92/10539
- DE-A- 19 611 671
- DE-A- 19 711 712
- DE-A- 19 938 672

## Beschreibung

Die Erfindung betrifft die Verwendung von Polymerisaten zur Stärkemodifizierung, wobei die Polymerisate in Form deren Polymerpulver oder als wässrige Polymerdispersion eingesetzt werden.

Zur Herstellung von biologisch abbaubaren Formkörpern wird häufig Stärke eingesetzt. Stärke, insbesondere destrukturierte Stärke, ist im getrockneten Zustand aber meist hart und spröde und bei höheren Temperaturen nicht verformbar. Durch Wasserzugabe lösen sich teilweise die inneren Bindungen und die Masse wird weicher und formbar. Diese Verformbarkeit kann durch Zugabe von thermoplastischen Polymeren erhöht werden, um eine extrudierbare oder spritzgußfähige Masse zu erhalten. Häufig wird die Stärke mit Restfeuchtigkeit in einem eigenen Schritt vorbehandelt (destrukturiert) und pelletiert. Diese Pellets werden dann zusammen mit Polymergranulaten thermomechanisch in die gewünschte Form gebraucht.

Aus der EP-A 327505 ist bekannt, granuläre, destrukturierte Stärke und granuläre, wasserunlösliche Thermoplasten zu mischen, und aus der Schmelze dieser Mischung zu Formkörpern zu verarbeiten.

In der WO-A 99/29733 wird ein Prozess beschrieben, bei dem Kartoffelschalen und -reste zusammen mit bioabbaubaren Polymeren und Weichmachern durch thermomechanische Behandlung zu Körpern mit guter mechanischer Festigkeit und biologischen Abbaubarkeit geformt werden.

Die EP-A 611804 betrifft extrudierbare Stärkezusammensetzungen aus thermoplastischem Polyvinylalkohol, thermoplastisch modifizierter Stärke, insbesondere hydroxypropylierter Stärke und Weichmacher.

In der EP-A 522358 werden thermoplastisch verarbeitbare Massen aus Stärke und extrem hochmolekularen Acrylatpolymere beschrieben, die gut entformbare, feste Formkörper ergeben.

Die EP-A 1229075 beschreibt ein thermoplastisches Polymerkomposit auf Basis nativer Stärke, einem synthetischen Polymer, einem Verträglichkeitsvermittler, einem Destrukturierungsmittel und einem Schichtsilikat.

Es bestand die Aufgabe thermoplastisch modifizierte Stärkezusammensetzungen zur Verfügung zu stellen, welche neben sehr guter Verarbeitbarkeit, auch zu Formkörpern führen, welche sich durch erhöhte Festigkeit, insbesondere im nassen Zustand, auszeichnen.

Gegenstand der Erfindung ist die Verwendung von Polymerisaten, in Form deren Polymerpulver oder als wässrige Polymerdispersion und in einer Menge von 5 bis 60 Gew.-%, jeweils. Polymerisatgewicht bezogen auf den Stärkanteil, zur Stärkemodifizierung, dadurch gekennzeichnet, dass mit Schutzkolloid und/oder Emulgator stabilisierte Polymerisate aus einer oder mehreren Comonomereinheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Vinylaromaten und Vinylhalogenide eingesetzt werden, welche noch 0.1 bis 20.0 Gew.-% funktionelle Comonomer-Einheiten aus der Gruppe umfassend Carboxyl-, Epoxy- und NH-funktionelle, ethylenisch ungesättigte Comonomere sowie Hydroxykylacrylate und Hydroxyalkylmethacrylate mit C₁- bis C₈-Alkylreste, und gegebenenfalls noch Olefincomonomereinheiten enthalten, wobei sich die Angaben in Gew.-% auf das Gesamtgewicht des Polymerisats beziehen.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 15 C-Atomen, beispielsweise-VeoVa9^{R} oder VeoVa10^{R} (Handelsnamen der Firma Shell). Besonders bevorzugt ist Vinylacetat.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat; Ethylmethacrylat, Propylacrylat, Propylmethacrylat, n-Butylacrylat, n-Butylmethacrylat, t-Butylacrylat, t-Butylmethacrylat, 2-Ethylhexylacrylat, Norbornylacrylat. Besonders bevorzugt sind Methylacrylat, Methylmethacrylat, n-Butylacrylat, 2-Ethylhexylacrylat und Norbornylacrylat.

Geeignete Diene sind 1,3-Butadien und Isopren. Als Vinylaromaten können Styrol und Vinyltoluol copolymerisiert werden. Aus der Gruppe der Vinylhalogenide wird üblicherweise Vinylchlorid eingesetzt.

Geeignete carboxylfunktionelle Comonomere sind ethylenisch ungesättigte Mono- und Dicarbonsäuren mit 2 bis 10 C-Atomen, vorzugsweise Acrylsäure, Methacrylsäure, Crotonsäure, Itaconsäure, Fumarsäure und Maleinsäure. Die Carboxylfunktion kann auch durch Copolymerisation von Maleinsäureanhydrid in das Copolymer eingeführt werden. Geeignete Hydroxyalkylacrylate und Hydroxyalkylmethacrylate mit C₁- bis C₈-Alkylrest sind vorzugsweise Hydroxyethylacrylat und-methacrylat, Hydroxypropylacrylat und -methacrylat, Hydroxybutylacrylat und -methacrylat. Geeignete epoxyfunktionelle Comonomere sind Glycidylacrylat und Glycidylmethacrylat. Geeignete NH-funktionelle Comonomere sind Acrylamid, Methacrylamid, N-Alkylol-funktionelle Comonomere mit C₁- bis C₄-Alkylol-Rest, bevorzugt N-Methylol-Rest, wie N-Methylolacrylamid (NMA), N-Methylolmethacrylamid, N-Methylolallylcarbamat, C₁- bis C₄-Alkylether von N-Methylolacrylamid, N-Methylolmethacrylamid und N-Methylolallylcarbamat, beispielsweise deren Isobutoxyether, sowie C₁- bis C₄-Alkylester des N-Methylolacrylamids, des N-Methylolmethacrylamids und des N-Methylolallylcarbamats. Besonders bevorzugt werden N-Methylol-funktionelle Comonomer-einheiten, am meisten bevorzugt werden N-Methylolacrylamid, N-Methylolmethacrylamid, N-Methylolallylcarbamat, C₁- bis C₄-Alkylether von N-Methylolacrylamid wie der Isobutoxyether. Der Anteil an funktionellen Einheiten beträgt bevorzugt 0.1 bis 10 Gew.-%, bezogen auf das Gesamtgewicht des Copolymers.

Bevorzugt sind die nachfolgend genannten Polymere, welche noch die eben genannten, funktionelle Gruppen enthaltenden Einheiten, in den eben beschriebenen Mengen aufweisen: Vinylacetat-Polymerisate;
Vinylester-Ethylen-Copolymere, wie vinylacetat-EthylenCopolymere;
Vinylester-Ethylen-Vinylchlorid-Copolymere, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure mit 5 bis 15 C-Atomen, insbesondere Versaticsäurevinylester (VeoVa9R, Ve6Va10^{R}), enthalten sind; Vinylacetat-Copolymere mit einem oder mehreren copolymerisierbaren Vinylester wie Vinyllaurat, Vinylpivalat, Vinyl-2-ethylhexansäureester, Vinylester einer alpha-verzweigten Carbonsäure mit 5 bis 15 C-Atomen, insbesondere Versaticsäure-Vinylester (VeoVa9^{R}, VeoVa10^{R}), welche gegebenenfalls noch Ethylen enthalten;
Vinylester-Acrylsäureester-Copolymerisate insbesondere mit Vinylacetat und Butylacrylat und/oder 2-Ethylhexylacrylat, welche gegebenenfalls noch Ethylen enthalten;
Vinylester-Acrylsäureester-Copolymerisate mit Vinylacetat und/oder Vinyllaurat und/oder Versaticsäure-Vinylester und Acrylsäureester, insbesondere Butylacrylat oder 2-Ethylhexylacrylat, welche gegebenenfalls noch Ethylen enthalten;
(Meth)acrylsäureester- und Styrol-Polymerisate wie Copolymerisate mit n-Butylacrylat und/oder 2-Ethylhexylacrylat; Copolymerisate von Methylmethacrylat mit Butylacrylat und/oder 2-Ethylhexylacrylat, und/oder 1,3-Butadien;
Styrol-1,3-Butadien-Copolymere und Styrol-(Meth)Acrylsäureester-Copolymere wie Styrol-Butylacrylat, Styrol-Methylmethacrylat-Butylacrylat oder Styrol-2-Ethylhexylacrylat, wobei als Butylacrylat n-, iso- und t-Butylacrylat eingesetzt werden kann.

Besonders bevorzugt werden Vinylester-Polymerisate, insbesondere Vinylacetat-Polymerisate, Vinylacetat-Ethylen-Copolymerisate, Vinylacetat-Ethylen-Vinylchlorid-Copolymerisate, Vinylester-Acrylsäureester-Copolymerisate insbesondere mit Vinylacetat und Butylacrylat und/oder 2-Ethylhexylacrylat. Am meisten bevorzugt werden N-Methylol-funktionelle Vinylester-Polymerisate wie Vinylacetat-N-Methylolacrylamid-Copolymerisate und Vinylacetat-Ethylen-N-Methylolacrylamid-Copolymerisate.

Die Monomerauswahl bzw. die Auswahl der Gewichtsanteile der Comonomere erfolgt dabei so, dass die Polymerisate eine Glasübergangstemperatur Tg von -30°C bis +120°C, vorzugsweise +10°C bis +80°C aufweisen. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate kann mittels bekannter radikalisch initiierter Polymerisationsverfahren erfolgen, beispielsweise mittels wässriger Suspensionspolymerisation oder wässriger Emulsionspolymerisation. Bevorzugt ist die Emulsionspolymerisation. Zur Trocknung der Lösungen beziehungsweise Dispersionen können alle gängigen Trocknungsverfahren angewendet werden: Sprühtrocknung, Walzentrocknung, Gefriertrocknung, Bandtrocknung, Koagulation mit anschließender Wirbelschichttrocknung. Bevorzugt zur Herstellung von in Wasser redispergierbaren Polymerpulvern werden Sprühtrocknungs- und Walzentrocknungsverfahren angewendet. Bei der Trocknung können gegebenenfalls noch Additive wie Flammschutzmittel, Weichmacher, Füllstoffe, und Komplexbildner zugegeben werden.

Emulgatorstabilisierte Polymerisate enthalten 1 bis 20 Gew.-% Emulgator, bezogen auf Polymerisat. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Bevorzugt werden mit Schutzkolloid stabilisierte Polymerisate. Geeignete Schutzkolloide sind Polyvinylalkohole, Polyvinylacetale, Polyvinylpyrrolidone, Cellulosen und deren Derivate wie Carboxymethyl-, Methyl-, Hydroxyethyl-, Hydroxypropyl-Derivate, Poly(meth)acrylsäure, Copolymerisate von (Meth)acrylaten mit carboxylfunktionellen Comonomereinheiten, Poly(meth)acrylamid, Polyvinylsulfonsäuren und deren Copolymere, Melaminformaldehydsulfonate, Naphthalinformaldehydsulfonate, Styrolmaleinsäure- und Vinylethermaleinsäure-Copolymere, Stärke, Dextrine. Der Schutzkolloid-Anteil beträgt im allgemeinen 1 bis 30 Gew.-%, bezogen auf das Gewicht des Polymerisats.

Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bits 10 Gew.-%, bezogen auf das Gesamtgewicht des teilverseiften Polyvinylalkohols. Es können auch Gemische der genannten Polyvinylalkohole eingesetzt werden.

Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich.

Geeignete Stärken sind dem Fachmann bekannt. Die Stärke kann aus beliebigen Quellen stammen. Beispiele sind Kartoffelstärke, Maisstärke, Weizenstärke, Reisstärke, Tabioka-Stärke. Die Stärke kann auch aus Abfällen, beispielsweise Kartoffelresten oder Kartoffelschalen, gewonnen werden oder deren Gemisch sein. Die Stärke kann in nativer Form, als destrukturierte Stärke, und als chemisch modifizierte Stärke, beispielsweise als hydroxyalkylierte Stärke, eingesetzt werden.

Die Polymerisate, in Form deren wässrigen Dispersion, deren Polymerpulver, insbesondere deren in Wasser redispergierbaren Pulver werden dabei in einer Menge von vorzugsweise 5 bis 25 Gew.-% eingesetzt, jeweils Polymerisatgewicht bezogen auf den Stärkeanteil. Gegebenenfalls können die damit erhältlichen Stärkezusaminensetzungen noch weitere Zusatzstoffe enthalten, wie zusätzlich Bindemittel, beispielsweise solche auf Basis von biologisch abbaubaren Polyestern, Füllstoffe, Fasern jeglicher Art, insbesonders Fasern aus natürlichen Rohstoffen wie Cellulose (Holzpartikel, Holzmehl, Holzfasern), Stroh, Baumwolle, sowie Pigmente, Gleitmittel und Weichmacher wie Glycerine, Sorbitole.

Besonders vorteilhaft ist die Verwendung der Polymerisate in Stärkezusammensetzungen, welche neben Stärke und Polymerisat noch Celluloseanteile in Form von Holzpartikel, Holzfasern und Holzmehl enthalten. Üblicheriweise betragen die Gew.-Anteile in dieser Mischung 20 bis 80 Gew.-% Celluloseanteil, 10 bis 50 Gew.-% Stärke und 5 bis 50 Gew.-% Polymerisat, wobei sich die Anteile jeweils auf 100 Gew.-% aufaddieren. Diese Zusamensetzungen eignen sich zur Herstellung von Holzextrudaten, welche sich durch deren glatte Oberfläche auszeichnen.

Zur Herstellung der Stärkezusammensetzungen werden der Stärkeanteil und das Polymerisat, sowie gegebenenfalls weitere Zusatzstoffe miteinander vermischt. Vorzugsweise wird der Stärkeanteil in Pulverform mit dem pulverförmigen Polymerisat vermischt, und gegebenenfalls weitere Zusatzstoffe zugegeben. Die Stärkezusammensetzungen können als Klebstoffe, vorzugsweise Hotmelts, eingesetzt werden oder zu Formkörpern weiterverarbeitet werden.

Vor der Weiterverarbeitung zu Formkörpern wird die Stärkezusammensetzung gegebenenfalls noch mit Wasser angeteigt. Vorzugsweise bis zu einem Wasseranteil an der Gesamtmischung von 10 bis 40 Gew.-%. Bei der Verwendung von Polymerdispersionen kann dieser Wasseranteil auch über die Polymerdispersion eingetragen werden. Die Weiterverarbeitung kann mit den für die Verarbeitung von Thermoplasten gebräuchlichen Werkzeugen mittels Extrudieren, Blasextrudieren, Schaumextrudieren, Spritzgießen, Kalandrieren, Tiefziehen erfolgen. Vorzugsweise wird so vorgegangen, dass die Komponenten vorgemischt oder getrennt in das Werkzeug, beispielsweise einem Extruder, dosiert werden, und bei Temperaturen von 70°C bis 150°C, vorzugsweise 80°C bis 120°C, verarbeitet werden.

Auf diese Weise werden verrottbare und nicht verrottbare Formkörper, beispielsweise Blumentöpfe und Verpackungsmaterialien wie Verpackungsfüllkörper (Schaumextrudate) oder Folien, zugänglich. Unter verrottbar ist dabei zu verstehen, dass die Anforderung der Norm EN 13432 erfüllt wird.

Mit der erfindungsgemäßen Verwendung werden Formteile zugänglich, die eine gute mechanische Festigkeit, reduzierte Wasserempfindlichkeit, geringere Wasserquellung aufweisen und verrottbar sind. Insbesondere beim Einsatz von Polymerisaten in Form deren Redispersionspulver können bei der Pelletierung ein höherer Durchsatz, stabilere und besser gebundene Pellets erhalten werden. Die thermoplastische Weiterverarbeitung der Pellets wird gefördert. Die Wasserquellung ist geringer, die Festigkeit und Elastizität ist höher und bei der Weiterverarbeitung (Extrusion oder Spritzguß) kann der Zusatz weitere thermoplastischer Polymere reduziert werden oder ganz unterbleiben.

Überraschend ist, dass insbesondere die vernetzbare N-Methylol-Funktionen enthaltenden Polymerisate die thermoplastische Verarbeitung der Stärke nicht behindern, sondern sogar stabilisieren. Als Polymerpulver liegen diese als gut rieselfähiges und dosierbares Pulver vor, das sich besser und schneller im thermomechanischen Prozeß einarbeiten und verteilen läßt als üblicherweise eingesetzte Polymerzusätze wie Polylactate oder Biopolyester.

### Beispiele:

Es wurden folgende Materialien eingesetzt:
Stärkepulver aus Kartoffelresten mit einer Restfeuchte von < 10 Gew.-%.
Redispersionspulver auf Basis eines Vinylacetat-N-Methylolacrylamid-Copolymerisats stabilisiert mit einem teilverseiften Polyvinylalkohol.

### Herstellung der Probekörper:

Das Stärkepulver wurde, gegebenenfalls nach Trockenmischung mit dem Redispersionspulver, mit 30 Gew.-% Wasser angeteigt und nochmals in einer Retschmühle RM100 10 min lang homogenisiert. Die erhaltene Paste wurde auf teflonisiertem Gewebe eingerahmt von einem 2 mm dicken Rahmen ausgebreitet und dann mit der vorhandenen Restfeuchte in einer Presse für 3 min bei 120 bar Druck und 120°C Plattentemperatur thermomechanisch verpresst. Zur Beseitigung des entstehenden Dampfdrucks wurden dabei 3 Lüftungsschritte in 40 sec Abstand durchgeführt. Nach 5 min Wasserkühlung wurde die Presse geöffnet, aus den erhaltenen Platten wurden Probekörper geschnitten und bei Raumtemperatur bis zur Gewichtskonstanz (< 1 Gew.-% Restfeuchte) liegengelassen.

Mit diesen Probekörpern wurden das Quellverhalten und Auslösung bei Wasserlagerung und die Zugfestigkeiten untersucht.

### Bestimmung der Wasserquellung

Zur Prüfung der Wasserquellung wurden Probekörper mit einer Fläche von 2 x 2 cm², und einer Dicke von 1.6 bis 1.7 mm verwendet und bei 21°C in Wasser zunächst 24 h gelagert. Nach Abtrocknung der Proben mit einem Tuch wurde die Gewichts- und Dickenzunahme sofort (24 h nass) und nach 24 h-Luftlagerung (24 h trocken) gemessen. Dann wurden die Proben wieder in Wasser für weitere 7 Tage eingelegt und nach Abtrocknung Gewichts- und Dickenzunahme bestimmt (7 d nass). Nach 1 Woche Trockenlagerung wurde erneut die verbleibende Gewichts- und Dickenveränderung gemessen (7 d trocken)..

In der Tabelle 1 sind die Ergebnisse, als Mittelwerte von 5 Einzelmessungen, zusammengefasst. Untersucht wurden Probekörper aus reiner Stärke und mit verschiedenen Zusatzmengen von Redispersionspulver.

**Tabelle 1:**

| Wasserquellung von Pressplatten aus Stärke mit verschiedenen Zusatzmengen an Polymerisat | | | | | | | | |
|---|---|---|---|---|---|---|---|---|
| Zusatz | % Gewichtsänderung | | | | % Dickenänderung | | | |
| [Gew%] | 24 h nass | 24 h trocken | 7 d nass | 7 d trocken | 24 h nass | 24 h trocken | 7 d nass | 7 d trocken |
| 0 | 39.3 | 22.9 | Zerfall | | 17.7 | 5.5 | Zerfall | |
| 6 | 41.7 | -17.8 | 45.7 | -46.8 | 20.8 | -4.9 | 14.8 | -73.0 |
| 10 | 40.1 | -17.3 | 44.8 | -34.6 | 17.6 | -7 | 7 | -69.4 |
| 15 | 34.5 | -17.9 | 39.7 | -38.7 | 8.4 | -7.9 | 8.6 | -68.3 |

Der Zusatz von Polymerisat zeigt eine signifikante Verbesserung der Wasserfestigkeit der Probekörper. Insbesondere wird ein Zerfall bei längerer Wasserlagerung schon bei geringen Zugabemengen von 6 Gew.-% Polymerisat verhindert. Die Kurzzeitquellung (nach 24 h) wird bei Zugaben von 15 Gew.-% Polymerisat drastisch verringert. Die negativen Werte nach der Trocknung weisen auf einen gewissen wasserlöslichen Anteil in der Stärke hin, der auch durch die Zugabe von Polymerpulver nicht wasserbeständig eingebunden werden kann.

### Zugfestigkeiten

Für die Zugfestigkeitsprüfung wurden Probestreifen 10 mm breit, 12 mm lang, und 1.6 bis 1.75 mm dick verwendet und mit einer Einspannlänge von 80, mm und Abzugsgeschwindigkeit von 5.0 mm/min bei Normklima (50 % Luftfeuchte, 23°C) Zugversuche bis zum Bruch durchgeführt.

In der Tabelle 2 sind die Ergebnisse (Mittelwerte von 6 Einzelmessungen) zusammengefasst. Untersucht wurde Stärke ohne Zusatz und mit verschiedenen Zusatzmengen von Redispersionspulver:

**Tabelle 2:**

| Zugfestigkeiten von Pressplatten der Stärke-Redispersions-pulver-Mischungen ( zweikomponentig) | | | | | |
|---|---|---|---|---|---|
| RD-Pulver | E-Modul | Reissspannung | Dehnung | Bruchspannung | Bruchweg |
| Gew.-% | N/mm² | N/mm² | % | N/mm² | mm |
| 0 | 3400 | 5.09. | 0.195 | 3.74 | 0.178 |
| 6. | 3820 | 5.63 | 0.162 | 4.22 | 0.147. |
| 10 | 3220 | 7.02 | 0.373 | 5.11 | 0.369 |
| 15 | 3540 | 7.97 | 0.300 | 6.83 | 0.315 |

Während sich das Elastizitätsmodul kaum ändert, erhöht sich die maximale Reissspannung deutlich mit steigender Zugabe von Redispersionspulver. Das Material bleibt hart und zeigt geringe Dehnung bei maximaler Zugkraft.

Die Prüfungen zeigen auf, dass die Festigkeit von Stärkeformkörpern mit Zugaben von bis zu 15 % deutlich verbessert werden kann.

### Pelletierversuche:

Für den Einsatz des Materials als formgeberide Masse in Extrusion und Spritzguß wurden Pelletierversuche durchgeführt.

Die Homogenisierung und Pelletisierung zum Granulat wurde in einem Doppelschneckenextruder 20 D durchgeführt, bei Temperaturen von 80°C bis 110°C. Es wurden Pellets erhalten, die mit Zusatz von Polymerisat fester und staubfreier waren.

Von diesen Pellets wurde die Wasserquellung untersucht und eine deutliche Reduzierung der Wasserquellung, sowie eine Verbesserung der Festigkeit nach der Wasserlagerung festgestellt.

Die Ergebnisse dieser Untersuchungen sind in Tabelle 3 zusammengefasst:

**Tabelle 3: Wasserquellung der Pellets aus Stärke-Redispersionspulver-Mischung**

| Nr. | Zusammensetzung | Rest-H₂O [%] | H₂O-Aufnahme [%] | Bemerkung |
|---|---|---|---|---|
| 1 | Stärke | 5.6 | 177 | Pellets haben Form beibe-halten, sind doppelt so groß gequollen, von 3.89 mm auf 5.04 mm, Wasser gelb, Pellets weich, streichfähig |
| | | | | |
| 2 | Stärke + 15% RD-Pulver | 5.8 | 132 | Pellets haben die Form beibehalten, Pellets um 0.5 -faches größer gequollen, Wasser gelb, Pellets etwas härter |
| | | | | |

Versuche mit dreikomponentigen Materialmischungen aus Stärke, Redispersionspulver und thermoplastischem Polyester:
Zu den bereits oben beschriebenen Materalien Stärke und Redispersionspulver wurde folgender thermoplastischer Kunststoff eingearbeitet, um eine thermoplastisch gut verarbeitbare Mischung zu erhalten:
Linearer Polycaprolacton-Polyester mit durchschnittlichem Molekulargewicht von 50000, Schmelztemperatur von 60°C, und einem Schmelzfluß (bei 80°C, 44 psi) von 1.9 g / 10 min.

Eine Mischung aus (75-x) Gew.-% Stärke, 25 Gew.-% Polyester und x Gew.-% Redispersionspulver wurde auf einem Mischwalzwerk bei 130°C Walzentemperatur für 30 min (bzw. bei Anwesenheit des Redispersionspulvers für 5 min) plastifiziert und homogenisiert und ein Walzfell mit einer Dicke von 1 mm hergestellt.

Bei der Verarbeitung konnte überraschenderweise die Walzzeit durch die Zugabe vom Redispersionspulver signifikant von 30 min auf 5 min reduziert werden.

Dieses Walzfell wurde geschichtet und in einer Presse für 3 min bei 120 bar Druck und 130°C Plattentemperatur thermomechanisch zu einer Materialplatte mit einer Dicke von 1.7 mm verpresst. Daraus wurden Prüfstreifen 20.0 mm breit, 200 mm lang geschnitten und Zugprüfungen mit einer Einspannlänge 100 mm und Abzugsgeschwindigkeit 5.0 mm/min bei Normklima (50 % Luftfeuchtigkeit, 23°C) durchgeführt.

Die Ergebnisse sind als Mittelwerte aus 6 Einzelmessungen in der Tabelle 4 zusammengestellt:
Sowohl die Reisskraft wie auch die Dehnung nehmen mit Erhöhung der RD-Pulvermenge erheblich zu. Das RD-Pulver verbessert neben der thermoplastischen Verarbeitbarkeit auch die erhaltenen Materaleigenschaften deutlich. Die Formteile werden fester, elastischer und bruchsicherer.

**Tabelle 4:**

| Zugfestigkeiten von Pressplatten aus dreikomponentigen Mischungen von Stärke (75-x %), Polyester (25 %) und RD-Pulver (x %) | | | | | |
|---|---|---|---|---|---|
| RD-Pulver | E-Modul | Reisskraft | Dehnung | Spannung beim Bruch | Bruchweg |
| x % | N/mm² | N/mm² | % | N/mm² | mm |
| | | | | | |
| 0 | 21700 | 41.7 | 0.318 | 41.2 | 0.615 |
| 4.5 | 21400 | 72.7 | 0.571 | 70.4 | 1.050 |
| 7.5 | 23100 | 117 | 1.270 | 115 | 2.280 |
| 11.25 | 23000 | 102 | 1.190 | 102 | 2.210 |
| 37.5 | 22600 | 129 | 1.300 | 129 | 2.560 |

Versuch mit dreikomponentigen Materialmischungen aus Stärke, Redispersionspulver und partikulärem Holzmehl

Zu 20 Gew.-Teilen Maisstärke wurden 10 Gew.-Teile des Redispersionspulvers und 60 Gew.-Teile partikuläres Holz, wie es beim Holzverarbeiten durch Sägen und Fräsen mit einer Restfeuchtigkeit von ca. 10 % anfällt, mit 2 Gew.-Teilen linearem PE-Wachs als Gleitmittel gemischt und in einem Extruder bei Temperaturen um 150°C und Druck um 200 bar zu Pellets (3 mm) geformt.

Die Pellets wurden in einem konischen Doppelschneckenextruder bei 150°C und einem Druck um 200 bar zu einem Formteil extrudiert.

Das erhaltene Formteil zeigte eine gleichmäßige glatte Oberfläche, die ähnlich einem Holzwerkstück gut verarbeitbar ist. Das Werkstück ist sehr stabil und weist eine Biegefestigkeit ( nach ISO 868) von 311.5 N/mm² und ein Biege-E-Modul von 3650 N/mm² auf. Bei Wasserlagerung nimmt es nach 1 Stunde 11.6 % an Gewicht zu.

## Patentansprüche

1. Verwendung von Polymerisaten, in Form deren Polymerpulver oder als wässrige Polymerdispersion und in einer Menge von 5 bis 60 Gew.-%, jeweils Polymerisatgewicht bezogen auf den Stärkeanteil, zur Stärkemodifizierung, **dadurch gekennzeichnet, dass** mit Schutzkolloid und/oder Emulgator stabilisierte Polymerisate aus einer oder mehreren Comonomereinheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Vinylaromaten und Vinylhalogenide eingesetzt werden, welche noch 0.1 bis 20.0 Gew.-% funktionelle Comonomer-Einheiten aus der Gruppe umfassend Carboxyl-, Epoxy- und NH-funktionelle, ethylenisch ungesättigte Comonomere sowie Hydroxyalkylacrylate und Hydroxyalkylmethacry late mit C₁- bis C₈-Alkylrest, und gegebenenfalls noch Olefincomonomereinheiten enthalten, wobei sich die Angaben in Gew.-% auf das Gesamtgewicht des Polymerisats beziehen.

2. Verwendung nach Anspruch 1, **dadurch gekennzeichnet, dass** Polymerisate aus einer oder mehreren Comonomereinheiten aus der Gruppe umfassend Vinylester von unverzweigten oder verzweigten Carbonsäuren mit 1 bis 18 C-Atomen verwendet werden.

3. Verwendung nach Anspruch 1 oder 2, **dadurch gekennzeichnet, dass** N-Alkylol-funktionelle Comonomereinheiten mit C₁- bis C₄-Alkylol-Rest enthalten sind.

4. Verwendung nach Anspruch 3, **dadurch gekennzeichnet, dass** ein oder mehrere Comonomereinheiten abgeleitet von N-Methylolacrylamid (NMA), N-Methylolmethacrylamid, N-Methylolallylcarbamat, C₁- bis C₄-Alkylether von N-Methylolacrylamid, N-Methylolmethacrylamid und N-Methylolallylcarbamate, sowie C₁- bis C₄-Alkylester des N-Methylolacrylamids, des N-Methylolmethacrylamids und des N-Methylolallylcarbamats, enthalten sind.

5. Verwendung nach Anspruch 1 bis 4, **dadurch gekennzeichnet, dass** als Polymerisate Vinylacetat-Polymerisate, Vinylacetat-Ethylen-Copolymerisate, Vinylacetat-Ethylen-Vinylchlorid-Copolymerisate oder Vinylester-Acrylsäureester-Copolymerisate verwendet werden.

6. Verwendung nach Anspruch 1 bis 5, **dadurch gekennzeichnet, dass** die Monomerauswahl bzw. die Auswahl der Gewichtsanteile der Comonomere so erfolgt, dass die Polymerisate eine Glasübergangstemperatur Tg von -30°C bis +120°C haben.

7. Verwendung nach Anspruch 1 bis 6, **dadurch gekennzeichnet, dass** der Schutzkolloid-Anteil 1 bis 30 Gew.-%, bezogen auf das Gewicht des Polymerisats, beträgt.

8. Verwendung nach Anspruch 1 bis 7, **dadurch gekennzeichnet, dass** als Schutzkolloid ein oder mehrere enthalten sind, aus der Gruppe umfassend Polyvinylalkohole, Polyvinylacetale, Polyvinylpyrrolidone, Cellulosen, Cellulose-Derivate, Poly(meth)acrylsäure, Copolymerisate von (Meth)-acrylaten mit carboxylfunktionellen Comonomereinheiten, Poly(meth)acrylamid, Polyvinylsulfonsäuren und deren Copolymere, Melaminformaldehydsulfonate, Naphthalinformaldehydsulfonate, Styrolmaleinsäure- und Vinylethermaleinsäure-Copolymere, Stärke, Dextrine.

9. Verwendung nach Anspruch 8, **dadurch gekennzeichnet, dass** als Schutzkolloid Polyvinylalkohole mit einem Hydrolysegrad von 85 bis 94 mol-% und einer Höpplerviskosität, in 4 %-iger wässriger Lösung von 3 bis 15 mPas (Methode nach Höppler bei 20°C, DIN 53015) enthalten sind.

10. Verwendung nach Anspruch 1 bis 9, **dadurch gekennzeichnet, dass** die Stärke in nativer Form, als destrukturierte Stärke, oder als chemisch modifizierte Stärke eingesetzt wird.

11. Verwendung nach Anspruch 1 bis 10, **dadurch gekennzeichnet, dass** die Stärkezusammensetzung als Klebstoffe verwendet wird.

12. Verwendung nach Anspruch 1 bis 11, **dadurch gekennzeichnet, dass** die Stärkezusammensetzung zur Weiterverarbeitung zu Formkörpern verwendet wird.

13. Verwendung nach Anspruch 12, **dadurch gekennzeichnet, dass** die Weiterverarbeitung mittels Extrudieren, Blasextrudieren, Schaumextrudieren, Spritzgießen, Kalandrieren, Tiefzehen erfolgt.

14. Verwendung nach Anspruch 13, **dadurch gekennzeichnet, dass** die Stärkezusammensetzung noch zusätzliches Bindemittel auf der Basis von biologisch abbaubarem Polyester enthält.

15. Verwendung nach Anspruch 13, **dadurch** gekenntzeichnet, dass die Stärkezusammensetzung noch Celluloseanteile in Form - von Holzpartikeln, Holzfasern und Holzmehl enthält.

16. Verwendung nach Anspruch 13 oder 14, **dadurch gekennzeichnet, dass** die Weiterverarbeitung zu verrottbaren Formkörpern erfolgt.

17. Verwendung nach Anspruch 13 oder 14, **dadurch gekennzeichnet, dass** die Weiterverarbeitung zu verrottbaren Folien erfolgt.

## Claims

1. Use of polymers, in the form of their polymer powders or as an aqueous polymer dispersion and in an amount of from 5 to 60% by weight, in each case polymer weight based on the proportion of starch, for starch modification, **characterized in that** polymers stabilized with a protective colloid and/or emulsifier and comprising one or more comonomer units from the group consisting of vinyl esters of straight-chain or branched alkylcarboxylic acids having 1 to 18 carbon atoms, acrylates or methacrylates of branched or straight-chain alcohols having 1 to 15 carbon atoms, dienes, vinylaromatics and vinyl halides are used, which polymers also contain from 0.1 to 20.0% by weight of functional comonomer units from the group consisting of carboxyl-, epoxy- and NH-functional, ethylenically unsaturated comonomers and hydroxyalkyl acrylates and hydroxyalkyl methacrylates having a C₁- to C₈-alkyl radical, and, if appropriate, also olefin comonomer units, the data in % by weight being based on the total weight of the polymer.

2. Use according to Claim 1, **characterized in that** polymers comprising one or more comonomer units from the group consisting of vinyl esters of straight-chain or branched carboxylic acids having 1 to 18 carbon atoms are used.

3. Use according to Claim 1 or 2, **characterized in that** N-alkylol-functional comonomer units having a C₁- to C₄-alkylol radical are contained.

4. Use according to Claim 3, **characterized in that** one or more comonomer units derived from N-methylolacrylamide (NMA), N-methylolmethacrylamide, N-methylolallylcarbamate, C₁- to C₄-alkyl ethers of N-methylolacrylamide, N-methylolmethacrylamide and N-methylolallylcarbamate, and C₁- to C₄-alkyl esters of N-methylolacrylamide, of N-methylolmethacrylamide and of N-methylolallylcarbamate are contained.

5. Use according to any of Claims 1 to 4, **characterized in that** the polymers used are vinyl acetate polymers, vinyl acetate/ethylene copolymers, vinyl acetate/ethylene/vinyl chloride copolymers or vinyl ester/acrylate copolymers.

6. Use according to any of Claims 1 to 5, **characterized in that** the choice of monomers or the choice of the amounts by weight of the comonomers is made so that the polymers have a glass transition temperature Tg of from -30°C to +120°C.

7. Use according to any of Claims 1 to 6, **characterized in that** the amount of protective colloid is from 1 to 30% by weight, based on the weight of the polymer.

8. Use according to any of Claims 1 to 7, **characterized in that** one or more protective colloids from the group consisting of polyvinyl alcohols, polyvinyl acetals, polyvinylpyrrolidones, celluloses, cellulose derivatives, poly(meth)acrylic acid, copolymers of (meth)acrylates with carboxy-functional comonomer units, poly(meth)acrylamide, polyvinylsulfonic acids and copolymers thereof, melamine-formaldehydesulfonates, naphthaleneformaldehyde-sulfonates, styrene/maleic acid and vinyl ether/maleic acid copolymers, starch and dextrins are contained as the protective colloid.

9. Use according to Claim 8, **characterized in that** polyvinyl alcohols having a degree of hydrolysis of from 85 to 94 mol% and a Höppler viscosity, in 4% strength aqueous solution, of from 3 to 15 mPa.s (method according to Höppler at 20°C, DIN 53015) are contained as the protective colloid.

10. Use according to any of Claims 1 to 9, **characterized in that** the starch is used in natural form, as destructured starch or as chemically modified starch.

11. Use according to any of Claims 1 to 10, **characterized in that** the starch composition is used as adhesives.

12. Use according to any of Claims 1 to 11, **characterized in that** the starch composition is used for further processing to give moldings.

13. Use according to Claim 12, **characterized in that** the further processing is effected by means of extrusion, extrusion blow molding, foam extrusion, injection molding, calendering or thermoforming.

14. Use according to Claim 13, **characterized in that** the starch composition still contains additional binder based on biodegradable polyester.

15. Use according to Claim 13, **characterized in that** the starch composition still contains cellulose fractions in the form of wood particles, wood fibers and woodmeal.

16. Use according to Claim 13 or 14, **characterized in that** the further processing is effected to give rottable moldings.

17. Use according to Claim 13 or 14, **characterized in that** the further processing is effected to give rottable films.

## Revendications

1. Utilisation de polymères, sous forme de leurs poudres de polymère ou sous forme de dispersion aqueuse de polymère et en une quantité de 5 à 60 % en poids, à chaque fois en poids de polymère par rapport à la proportion d'amidon, pour la modification d'amidon, **caractérisée en ce qu'**on utilise des polymères, stabilisés avec un colloïde protecteur et/ou un émulsifiant, constitués d'un ou de plusieurs motifs comonomères choisis dans le groupe comprenant des esters vinyliques d'acides alkylcarboxyliques ramifiés ou non ramifiés ayant de 1 à 18 atomes de carbone, des esters d'acide acrylique ou des esters d'acide méthacrylique d'alcools ramifiés ou non ramifiés ayant de 1 à 15 atomes de carbone, des diènes, des composés vinylaromatiques et des halogénures de vinyle, qui contiennent aussi de 0,1 à 20,0 % en poids de motifs comonomères fonctionnels choisis dans le groupe comprenant des comonomères à insaturation éthylénique, à fonction carboxy, époxy et NH, ainsi que des acrylates d'hydroxyalkyle et des méthacrylates d'hydroxyalkyle à radical alkyle en C₁-C₈, et éventuellement aussi des motifs comonomères oléfiniques, les données en % en poids se rapportant au poids total du polymère.

2. Utilisation selon la revendication 1, **caractérisée en ce qu'**on utilise des polymères constitués d'un ou de plusieurs motifs comonomères choisis dans le groupe comprenant des esters vinyliques d'acides carboxyliques ramifiés ou non ramifiés ayant de 1 à 18 atomes de carbone.

3. Utilisation selon la revendication 1 ou 2, **caractérisée en ce que** sont contenus des motifs comonomères à fonction N-alkylol, à radical alkylol en C₁-C₄.

4. Utilisation selon la revendication 3, **caractérisée en ce que** sont contenus un ou plusieurs motifs comonomères dérivés de N-méthylolacrylamide (NMA), de N-méthylolméthacrylamide, de carbamate de N-méthylolallyle, d'éthers alkyliques en C₁-C₄ de N-méthylolacrylamide, de N-méthylolméthacrylamide et de carbamate de N-méthylolallyle, ainsi que d'esters alkyliques en C₁-C₄ du N-méthylolacrylamide, du N-méthylolméthacrylamide et du carbamate de N-méthylolallyle.

5. Utilisation selon l'une quelconque des revendications 1 à 4, **caractérisée en ce qu'**on utilise comme polymères des polymères d'acétate de vinyle, des copolymères d'acétate de vinyle/éthylène, des copolymères d'acétate de vinyle/éthylène/chlorure de vinyle ou des copolymères d'ester vinylique/ester d'acide acrylique.

6. Utilisation selon l'une quelconque des revendications 1 à 5, **caractérisée en ce qu'**on effectue le choix des monomères ou le choix des quantités en poids des comonomères de telle manière que les polymères aient une température de transition vitreuse Tg de -30 °C à +120 °C.

7. Utilisation selon l'une quelconque des revendications 1 à 6, **caractérisée en ce que** la proportion de colloïde protecteur vaut de 1 à 30 % en poids, par rapport au poids du polymère.

8. Utilisation selon l'une quelconque des revendications 1 à 7, **caractérisée en ce qu'**en tant que colloïde protecteur est/sont contenu(s) un ou plusieurs colloïdes protecteurs choisis dans le groupe comprenant des poly(alcool vinylique)s, des polyvinylacétals, des polyvinylpyrrolidones, des celluloses, des dérivés de cellulose, le poly[acide (méth)acrylique], des copolymères de (méth)acrylates à motifs comonomères à fonction carboxy, le poly(méth)acrylamide, des acides polyvinylsulfoniques et leurs copolymères, des mélamine-formaldéhydesulfonates, des naphtalène-formaldéhydesulfonates, des copolymères styrène/acide maléique et éther vinylique/acide maléique, l'amidon et des dextrines.

9. Utilisation selon la revendication 8, **caractérisée en ce qu'**en tant que colloïde protecteur sont contenus des poly(alcool vinylique)s ayant un degré d'hydrolyse de 85 à 94 % en moles et une viscosité Hôppler, en solution aqueuse à 4 %, de 3 à 15 mPa.s (méthode selon Hôppler à 20 °C, DIN 53015).

10. Utilisation selon l'une quelconque des revendications 1 à 9, **caractérisée en ce qu'**on utilise l'amidon sous forme native, sous forme d'amidon déstructuré, ou sous forme d'amidon modifié chimiquement.

11. Utilisation selon l'une quelconque des revendications 1 à 10, **caractérisée en ce qu'**on utilise la composition d'amidon en tant qu'adhésif.

12. Utilisation selon l'une quelconque des revendications 1 à 11, **caractérisée en ce qu'**on utilise la composition d'amidon pour la transformation ultérieure en corps moulés.

13. Utilisation selon la revendication 12, **caractérisée en ce que** la transformation ultérieure s'effectue par extrusion, extrusion-soufflage, extrusion de mousse, moulage par injection, calandrage, emboutissage.

14. Utilisation selon la revendication 13, **caractérisée en ce que** la composition d'amidon contient encore un liant supplémentaire à base de polyester biologiquement dégradable.

15. Utilisation selon la revendication 13, **caractérisée en ce que** la composition d'amidon contient encore des fractions de cellulose sous forme de particules de bois, de fibres de bois et de sciure de bois.

16. Utilisation selon la revendication 13 ou 14, **caractérisée en ce qu'**on effectue la transformation ultérieure en corps moulés putrescibles.

17. Utilisation selon la revendication 13 ou 14, **caractérisée en ce qu'**on effectue la transformation ultérieure en films putrescibles.
